# EUROPÄISCHE PATENTSCHRIFT

(11) **EP 1 681 206 B1**
(45) Veröffentlichungstag und Bekanntmachung des Hinweises auf die Patenterteilung: **08.10.2008**
(21) Anmeldenummer: 05021929.4
(22) Anmeldetag: 07.10.2005
(51) Int. Cl.: B60R 16/02

(54) **Vorrichtung mit einer Dichtungstülle für einen Leitungsübergang zwischen relativ zueinander bewegbaren Fahrzeugteilen**
Device including a grommet for a communication passage between relatively movable vehicle components
Dispositif incluant un manchon d'étanchéité pour le passage entre des parties de véhicules, mobiles l'une par rapport à l'autre

(30) Priorität: 18.01.2005 DE 102005002258; 19.07.2005 DE 102005033621
(43) Veröffentlichungstag der Anmeldung: 19.07.2006
(73) Patentinhaber: Volkswagen Aktiengesellschaft, 38436 Wolfsburg (DE)
(72) Erfinder: Döring, Bernd, 38518 Gifhorn (DE)

(56) Entgegenhaltungen:
- EP-A- 0 812 733
- EP-A- 0 812 734
- EP-A- 0 855 312
- EP-A- 1 544 046
- DE-A1- 3 340 664
- DE-C1- 19 717 041
- DE-U1- 20 022 922
- FR-A- 2 641 820
- PATENT ABSTRACTS OF JAPAN Bd. 1999, Nr. 01, 29. Januar 1999 (1999-01-29) & JP 10 285764 A (SUMITOMO WIRING SYST LTD), 23. Oktober 1998 (1998-10-23)

## Beschreibung

Die Erfindung betrifft eine Vorrichtung mit einer Dichtungstülle für einen Leitungsübergang zwischen relativ zueinander bewegbaren Fahrzeugteilen, insbesondere für den Übergang eines Leitungsstranges zwischen einem Fahrzeugaufbauteil und einem Fahrzeuganbauteil, wie einer Fahrzeugtür oder -klappe.

Solche Vorrichtungen dienen vorzugsweise einer feuchtigkeits- und schmutzgeschützten Durchführung einer Leitung und/ oder eines Leitungsstranges (im folgenden Leitungsstrang) durch einen zwischen den Fahrzeugteilen gegebenen feuchtigkeits- und staubbeaufschlagten Freiraum und weisen je eine Befestigungsvorrichtung zur Anordnung am jeweiligen Fahrzeugteil und zwischen den Befestigungsvorrichtungen einen Faltenbalg (Dichtungsbalg) oder dergleichen auf, der eine Relativbewegung zwischen diesen bzw. den Fahrzeugteilen ermöglicht.
In der Regel sind die Befestigungsvorrichtungen an den Dichtungsbalg angeformt und aus einem konischen Rastfortsatz, einer Lippendichtung und einer zwischen diesen ausgebildeten Ringnut zur dichtenden Festlegung an einer Öffnung in der jeweiligen Faftrzeugteilwandung versehen. Dabei kann die jeweilige Befestigungsvorrichtung zusätzlich mit einem Rastrahmen versehen sein, mit dem diese an dem die Öffnung in der jeweiligen Fahrzeugteilwandung umgebenden Rand dichtend festlegbar ist. Der Rastrahmen dient einer Montageerleichterung und der Sicherstellung einer zuverlässigen Befestigung, insbesondere bei einem beengten Bauraum. Zur Ermöglichung einer Relativbewegung mit einer Abstandsveränderung zwischen den Fahrzeugteilen müssen die Dichtungstüllen flexibel und entsprechend dimensioniert sein, und sie benötigen einen Bauraum, in dem sie bei dem kleinsten Abstand zwischen den Fahrzeugteilen eine Ruhestellung einnehmen und aus dem heraus sie einer Vergrößerung des Abstandes folgen können. Beispiele für Dichtungstüllen finden sich in der DE 200 22 922 U1, der DE 33 40 664 A1 und der DE 101 01 014 A1.

Es ist Aufgabe der Erfindung, eine Vorrichtung mit einer Dichtungstülle für einen Leitungsübergang zwischen relativ zueinander bewegbaren Fahrzeugteilen so zu gestalten, dass der für diese zwischen den Fahrzeugteilen benötigte Bauraum minimiert ist.

Diese Aufgabe wird bei einer Vorrichtung mit einer Dichtungstülle mit den Merkmalen des Patentanspruchs 1. Vorteilhafte Ausgestaltungen sind in den Unteransprüchen aufgeführt.

Die Erfindung besteht darin, dass bei einer aus einem Dichtungsbalg und beidendig an diesem angeordneten Befestigungsvorrichtungen gebildeten Dichtungstülle für einen Leitungsübergang zwischen relativ zueinander bewegbaren Fahrzeugteilen, wobei die Befestigungsvorrichtungen dichtend in jeweils einer am jeweiligen Fahrzeugteil ausgebildeten Öffnung angeordnet sind, an einer der Befestigungsvorrichtungen eine Rückholfeder für die in der Dichtungstülle geführte Leitung angeordnet und im Abstand von der Befestigungsvorrichtung an der Leitung fixiert ist. Der Dichtungsbalg passt dabei seine Länge an den Abstand der fahrzeugteile an. Die Rückholfeder sorgt dafür, dass die Leitung bei einer Abstandsveränderung zwischen den Fahrzeugteilen straff gehalten, insbesondere bei einer Verringerung des Abstandes zurückgeführt wird. Das Zurückführen der Leitung in deren Ruheposition, die bei dem konstruktiv bedingten Minimalabstand zwischen den Fahrzeugteilen gegeben ist, ist mit einer Verringerung der Länge des elastischen Dichtungsbalges verbunden. Die in der Ruheposition der Leitung gegebene Länge des Dichtungsbalges ist dessen Ausgangslänge und bestimmt die Länge der Dichtungstülle. Diese führt der bei einer Abstandsvergrößerung zwischen den Fahrzeugteilen durch die straff geführte Leitung eine definierte Dehnbewegung aus. Damit wird der für die Dichtungstülle erforderliche Bauraum reduziert.

Die Rückholfeder ist vorteilhaft eine Druckfeder, die auf der dem Dichtungsbalg abgewandten Seite an der Befestigungsvorrichtung abgestützt ist und die in der Ausgangsstellung, in der zwischen den Fahrzeugteilen ein Minimalabstand gegeben ist, leicht vorgespannt sein kann. Mit dieser Federanordnung wird erreicht, dass sich der Dichtungsbalg unbehindert dehnen und zusammenziehen kann.

Dabei ist die Befestigungsvorrichtung mit einem Rastrahmen zur Anordnung in der für diese vorgesehenen Öffnung versehen, an dem einerseits die Rückholfeder abgestützt ist und mit dem auch die Dichtungstülle dichtend verbunden ist. Der Rastrahmen ist verdrehfest in der korrespondierenden Öffnung angeordnet. Diese Gestaltung trägt zu einer definierten Anordnung und Bewegung bei.

Zur Erzielung eines unbehinderten und definierten Bewegungsablaufes der Leitung bei einer Abstandsveränderung zwischen den Fahrzeugteilen und für eine definierte Anordnung der Rückholfeder ist es vorgesehen, daß der Rastrahmen einen Führungsansatz aufweist, in dem ein Verbindungselement zwischen der Rückholfeder und der Leitung verdrehfest längsverschiebbar angeordnet ist. Dabei ist der Führungsansatz hohlzylindrisch und das Verbindungselement kann hohlzylinderförmig ausgebildet sein, wobei letzteres mit zwei Gleitringen versehen ist, von denen der dichtungsbalgseitige Gleitring dichtungsbalgseitig zugleich eine Anlageschulter für die Rückhohlfeder ausbildet. Die Rückholfeder und auch die von dieser umgebenen Leitung sind auf diese Weise sicher geführt. Der definierte Bewegungsablauf der Dichtungstülle kann zusätzlich gesichert werden, indem auch die zweite Befestigungsvorrichtung mit der Leitung fest verbunden ist.

Nach einer weiteren vorteilhaften Ausbildung der Erfindung ist weiterhin vorgesehen, dass zumindest ein Teil der Falten des Dichtungsbalgs, insbesondere im Bereich des Biegeradius bei zueinander weg bewegten Teilen, abgeflacht ist.

Des Weiteren kann vorgesehen sein, dass die Leitung oder der Leitungsstrang zumindest im Bereich des Dichtungsbalgs mit einer gleitfähigen Ummantelung bzw. mit einer Ummantelung mit einem gleitfähigerem Material versehen ist.

Die Erfindung wird nachstehend anhand eines Ausführungsbeispiels erläutert. In den zugehörigen Zeichnungen zeigen:
- Fig. 1:: eine Dichtungstülle im Ausgangszustand,
- Fig. 2:: diese im gedehnten Zustand,
- Fig. 3:: einen Rastrahmen in einer Explosionsdarstellung und
- Fig. 4:: den Rastrahmen im montierten Zustand, geschnitten.

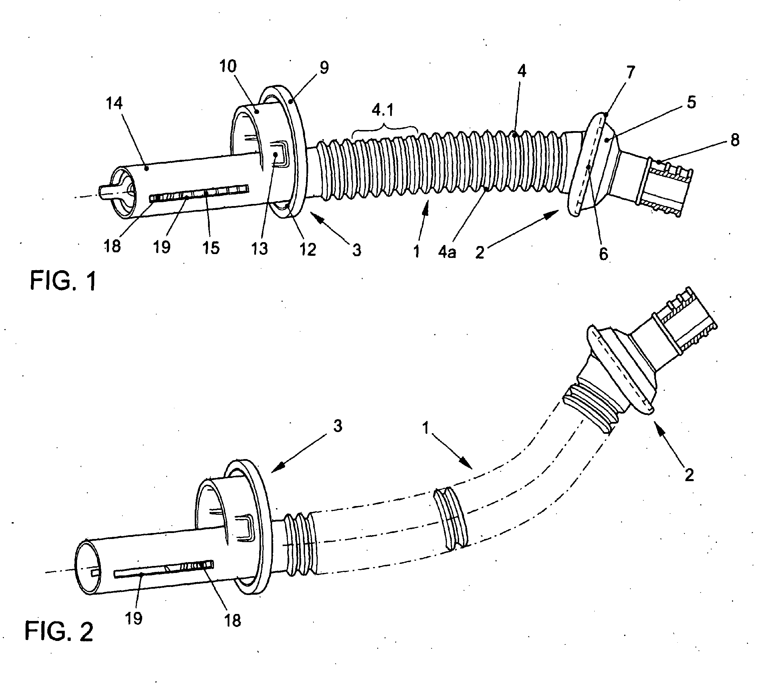

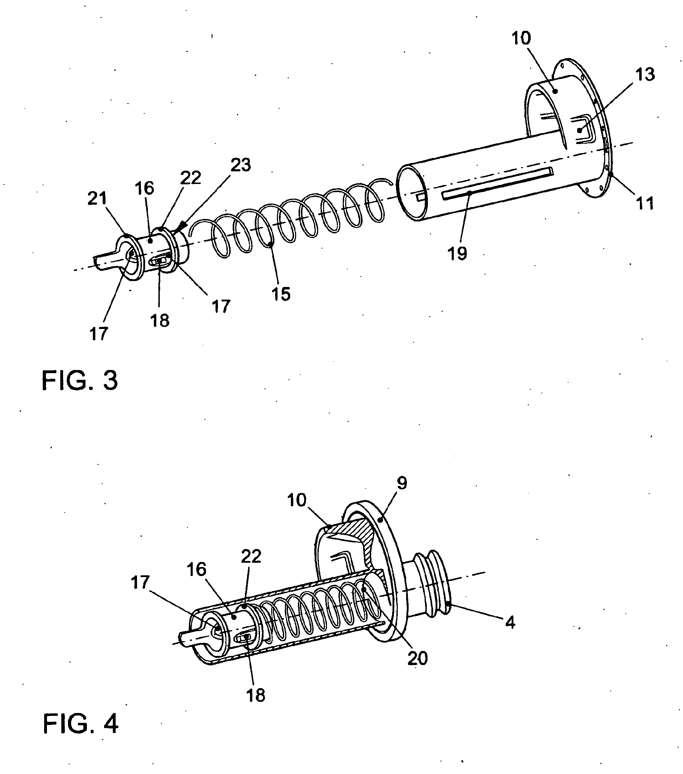

Die in Fig. 1 gezeigte Vorrichtung mit einer Dichtungstülle 1 für einen Leitungsübergang zwischen einer Fahrzeugkarosserie und einer Heckklappe eines Fahrzeugs weist zwei Befestigungsvorrichtungen 2 und 3 zur dichtenden Anordnung jeweils an einer in dem jeweiligen Fahrzeugteil ausgebildeten Öffnung sowie einen an die Befestigungsvorrichtungen 2, 3 angeordneten Dichtungsbalg 4 mit Falten 4a aus einem gummielastischen Material auf, wobei zumindest der Teil der Falten 4.1 des Dichtungsbalg, der im Bereich des Biegegrades des Dichtungsbalgs liegt abgeflacht ist. Die Befestigungsvorrichtung 2 zur Anordnung im Scharnierbereich der Heckklappe besteht aus einem konischen Stopfen 5, an dem sich dichtungsbalgseitig eine in gestrichelten Linien angedeutete konzentrische Nut 6 und eine konzentrische Dichtlippe 7 zum Einknöpfen (6) in die jeweilige Öffnung und zur dichtenden Anlage (7) am Rand derselben und auf der dem Dichtungsbalg 4 abgewandten Seite ein hohlzylindrischer Fortsatz 8 anschließt, über den die Dichtungstülle mit einem nicht dargestellten Leitungsstrang fest verbindbar ist. Die Befestigungsvorrichtung 3 ist aus einem an den Dichtungsbalg 4 angeformten ovalen tellerartigen Aufnahmeteil 9 und einem ovalen Rastrahmen 10 gebildet, wobei der Aufnahmeteil 9 einen am Rastrahmen 10 ausgebildeten Flansch (11, Fig. 3) dichtend umschließt und auf der dem Dichtungsbalg 4 abgewandten Seite mit einer Dichtlippe 12 zur Anlage an den eine ovale Öffnung in der Fahrzeugkarosserie umgebenden Rand versehen ist.

Der Rastrahmen 10 weist umfangsseitig zwei gegenüberliegend ausgebildete Rastzungen 13, die im montierten Zustand den Rand der ovalen Öffnung in der Fahrzeugkarosserie hintergreifen und die Befestigungsvorrichtung 3 festlegen, und einen hohlzylindrischen Führungsansatz 14 auf, in dem eine Druckfeder 15 und ein hohlzylindrisches, die Leitung und die Druckfeder 15 im Abstand vom Dichtungsbalg fest verbindendes hohlzylindrisches Verbindungselement (16, Fig. 3, 4) längsverschiebbar angeordnet sind. Zur Sicherstellung einer verdrehfesten Längsverschiebung ist das Verbindungselement 16 mit zwei seitlich ausgebildeten Rastzungen (17, Fig. 3, 4) mit nach außen weisenden Rastvorsprüngen 18 versehen, die jeweils mit einem im Führungsansatz 14 ausgebildeten Längsschlitz 19 in Eingriff stehen und die Längsverschiebung des Verbindungselementes 16 insbesondere nach der dem Dichtungsbalg 4 abgewandten Richtung begrenzen.

In den Fig. 3 und 4 ist die Ausbildung der Befestigungsvorrichtung 3 verdeutlicht. Die als Rückholfeder eingesetzte Druckfeder 15 ist an einer im Rastrahmen 10 ausgebildeten ringförmigen Anlageschulter 20 und an dem Verbindungselement 16 abgestützt und leicht vorgespannt. Das Verbindungselement 16 ist mit zwei Gleitringen 21, 22 versehen, von dem der dichtungsbalgseitige Gleitring 22 dichtungsbalgseitig zugleich eine Anlageschulter 23 für die Druckfeder 15 ausbildet. In Fig. 4 ist das Verbindungselement 16 im Ausgangszustand (Fig. 1) dargestellt, in dem die Heckklappe geschlossen ist.

Wird die Heckklappe geöffnet, wird der Abstand zwischen dieser und der Fahrzeugkarosserie größer, ebenso der Abstand der Befestigungsvorrichtung 2 mit dem fest mit dem Fortsatz 8 verbundenen Leitungsstrang von der Befestigungsvorrichtung 3.
Der Leitungsstrang zieht das fest mit diesem verbundene Verbindungselement 16 gegen die Kraft der Druckfeder 15 in Richtung des Dichtungsbalges 4, maximal bis zu dem durch das dichtungsbalgseitige Ende des jeweiligen Längsschlitzes 19 gebildeten Anschlag für den jeweiligen Rastvorsprung 18. Dabei wird der Dichtungsbalg 4 verdrehfest und elastisch gedehnt. Beim Schließen der Heckklappe wird der Abstand zwischen den Befestigungsvorrichtungen 2 und 3 wieder kleiner, die Druckfeder drückt das Verbindungselement 16 von dem sich zusammenziehenden Dichtungsbalg 4 weg und zieht den Leitungsstrang bis in seine definierte Ausgangslage (Fig. 1) mit sich, wobei das Zusammenziehen des Dichtungsbalges 4 durch die Befestigungsvorrichtung 2 unterstützt wird, die fest mit dem Leitungsstrang verbunden ist.

### Bezugszeichenliste

- 1: Dichtungstülle
- 2: Befestigungsvorrichtung
- 3: Befestigungsvorrichtung
- 4: Dichtungsbalg
- 4a: Falten
- 4.1: abgeflachte Falten
- 5: Stopfen
- 6: Nut
- 7: Dichtlippe
- 8: Fortsatz
- 9: Aufnahmeteil
- 10: Rastrahmen
- 11: Flansch
- 12: Dichtlippe
- 13: Rastzunge
- 14: Führungsansatz
- 15: Druckfeder
- 16: Verbindungselement
- 17: Rastzunge
- 18: Rastvorsprung
- 19: Längsschlitz
- 20: Anlageschulter
- 21: Gleitring
- 22: Gleitring
- 23: Anlageschulter

## Patentansprüche

1. Vorrichtung mit einer Dichtungstülle für einen Leitungs- oder Leitungsstrangübergang zwischen relativ zueinander bewegbaren Fahrzeugteilen, mit je einer Befestigungsvorrichtung zur dichtenden Anordnung an einer Öffnung im jeweiligen Fahrzeugteil und einem zwischen den Befestigungsvorrichtungen ausgebildeten elastischen Dichtungsbalg, wobei an einer Befestigungsvorrichtung (3) eine Rückholfeder (15) für die in der Dichtungstülle (1) geführte Leitung oder den geführten Leitungsstrang abgestützt und im Abstand vom Dichtungsbalg (4) an der Leitung fixiert ist, **dadurch gekennzeichnet, dass** die Befestigungsvorrichtung (3) mit einem Rastrahmen (10) zur verdrehfesten Anordnung in der für diese vorgesehenen Öffnung versehen ist, an dem die Rückholfeder (15) abgestützt und mit dem die Dichtungstülle (1) dichtend verbunden ist und der einen hohlzylindrischen Führungsansatz (14) für die Rückholfeder (15) aufweist, in dem ein Verbindungselement (16) verdrehfest längsverschiebbar angeordnet ist, mit dem die Rückholfeder (15) und die Leitung fest verbunden sind.

2. Vorrichtung nach Anspruch 1, **dadurch gekennzeichnet, dass** die Rückholfeder (15) eine auf der dem Dichtungsbalg (4) abgewandten Seite an der Befestigungsvorrichtung (3) abgestützte Druckfeder ist.

3. Vorrichtung nach Anspruch 1, **dadurch gekennzeichnet, dass** der Rastrahmen (10) und die Öffnung ovalförmig ausgebildet ist.

4. Vorrichtung nach Anspruch 1, **dadurch gekennzeichnet, dass** das Verbindungselement (16) hohlzylinderförmig ausgebildet ist und mit zwei Gleitringen (21, 22) versehen ist, von denen der dichtungsbalgseitige Gleitring (22) dichtungsbalgseitig zugleich eine Anlageschulter (23) für die Rückholfeder (15) ausbildet.

5. Vorrichtung nach Anspruch 1 oder 4, **dadurch gekennzeichnet, dass** das Verbindungselement (16) mit zwei seitlich ausgebildeten Rastzungen (17) mit nach außen weisenden Rastvorsprüngen (18) versehen ist, die jeweils mit einem im Führungsansatz (14) ausgebildeten Längsschlitz (19) in Eingriff stehen.

6. Vorrichtung nach einem der Ansprüche 1 bis 5, **dadurch gekennzeichnet, dass** die Leitung oder der Leitungsstrang mit der zweiten Befestigungsvorrichtung (2) fest verbunden ist.

7. Vorrichtung nach einem der Ansprüche 1 bis 6, **dadurch gekennzeichnet, dass** der Dichtungsbalg (4) in Längsrichtung angeordnete Falten (4a) aufweist, wobei zumindest ein Teil der Falten (4.1) zur Anlage an dem bewegbaren Fahrzeugteils abgeflacht ist.

8. Vorrichtung nach einem der Ansprüche 1 bis 7, **dadurch gekennzeichnet, dass** die Leitung oder der Leitungsstrang zumindest im Bereich des Dichtungsbalgs (4) eine gleitfähige Ummantelung aufweist.

## Claims

1. Device with a sealing grommet for the transfer of a line or line strand between vehicle parts which are movable relative to each other, with a respective fastening device for arranging in a sealing manner on an opening in the particular vehicle part, and with an elastic sealing bellows formed between the fastening devices, wherein a restoring spring (15) for the line guided in the sealing grommet (1) or for the guided line strand is supported on a fastening device (3) and is fixed to the line at a distance from the sealing bellows (4), **characterized in that**, for the rotationally fixed arrangement in the opening provided for it, the fastening device (3) is provided with a latching frame (10) on which the restoring spring (15) is supported and to which the sealing grommet (1) is connected in a sealing manner and which has a hollow-cylindrical guide extension (14) for the restoring spring (15), in which guide extension a connecting element (16), to which the restoring spring (15) and the line are fixedly connected, is arranged in a rotationally fixed and longitudinally displaceable manner.

2. Device according to Claim 1, **characterized in that** the restoring spring (15) is a compression spring which, on the side facing away from the sealing bellows (4), is supported on the fastening device (3).

3. Device according to Claim 1, **characterized in that** the latching frame (10) and the opening are of oval design.

4. Device according to Claim 1, **characterized in that** the connecting element (16) is of hollow-cylindrical design and is provided with two sliding rings (21, 22) of which the sliding ring (22) on the sealing-bellows side at the same time forms, on the sealing-bellows side, a bearing shoulder (23) for the restoring spring (15).

5. Device according to Claim 1 or 4, **characterized in that** the connecting element (16) is provided with two laterally formed latching tongues (17) having outwardly pointing latching projections (18) which are each in engagement with a longitudinal slot (19) formed in the guide extension (14).

6. Device according to one of Claims 1 to 5, **characterized in that** the line or the line strand is connected fixedly to the second fastening device (2).

7. Device according to one of Claims 1 to 6, **characterized in that** the sealing bellows (4) has folds (4a) arranged in the longitudinal direction, with at least some of the folds (4.1) being flattened so as to bear against the movable vehicle part.

8. Device according to one of Claims 1 to 7, **characterized in that** the line or the line strand has a slideable sheathing at least in the region of the sealing bellows (4).

## Revendications

1. Dispositif comprenant un manchon d'étanchéité pour un passage de lignes ou de tronçons de lignes entre des parties de véhicule mobiles l'une par rapport à l'autre, avec à chaque fois un dispositif de fixation pour la disposition hermétique au niveau d'une ouverture dans la partie de véhicule respective, et avec un soufflet d'étanchéité élastique réalisé entre les dispositifs de fixation, un ressort de retenue (15) pour la ligne ou le tronçon de ligne guidée dans le manchon d'étanchéité (1) étant supporté sur le dispositif de fixation (3) et fixé à distance du soufflet d'étanchéité (4) sur la ligne, **caractérisé en ce que** le dispositif de fixation (3) est pourvu d'un cadre d'encliquetage (10) pour la disposition fixe en rotation dans l'ouverture prévue pour lui, sur lequel cadre le ressort de retenue (15) est supporté et avec lequel le manchon d'étanchéité (1) est connecté hermétiquement, et qui présente une partie de guidage cylindrique creuse (14) pour le ressort de retenue (15), dans laquelle un élément de connexion (16) est disposé de manière déplaçable longitudinalement mais fixe en rotation, avec lequel le ressort de retenue (15) et la ligne sont connectés fixement.

2. Dispositif selon la revendication 1, **caractérisé en ce que** le ressort de retenue (15) est un ressort de pression supporté sur le dispositif de fixation (3) du côté opposé au soufflet d'étanchéité (4).

3. Dispositif selon la revendication 1, **caractérisé en ce que** le cadre d'encliquetage (10) et l'ouverture sont réalisés avec une forme ovale.

4. Dispositif selon la revendication 1, **caractérisé en ce que** l'élément de connexion (16) est réalisé avec une forme cylindrique creuse, et est pourvu de deux bagues de glissement (21, 22), dont la bague de glissement (22) du côté du soufflet d'étanchéité constitue, du côté du soufflet d'étanchéité, en même temps un épaulement d'appui (23) pour le ressort de retenue (15).

5. Dispositif selon la revendication 1 ou 4, **caractérisé en ce que** l'élément de connexion (16) est pourvu de deux langues d'encliquetage (17) réalisées latéralement avec des saillies d'encliquetage (18) tournées vers l'extérieur, qui sont en prise à chaque fois avec une fente longitudinale (19) réalisée dans la partie de guidage (14).

6. Dispositif selon l'une quelconque des revendications 1 à 5, **caractérisé en ce que** la ligne ou le tronçon de ligne est connecté(e) fixement au deuxième dispositif de fixation (2).

7. Dispositif selon l'une quelconque des revendications 1 à 6, **caractérisé en ce que** le soufflet d'étanchéité (4) présente des plis (4a) orientés dans la direction longitudinale, au moins une partie des plis (4.1) étant aplatie pour s'appliquer contre la partie mobile du véhicule.

8. Dispositif selon l'une quelconque des revendications 1 à 7, **caractérisé en ce que** la ligne ou le tronçon de ligne présente au moins dans la région du soufflet d'étanchéité (4) un gainage glissant.
